# EUROPEAN PATENT APPLICATION

(11) **EP 4 270 781 A1**
(43) Date of publication of application: **01.11.2023**
(21) Application number: 22191183.7
(22) Date of filing: 19.08.2022
(51) Int. Cl.: H02S 40/22, H02S 10/40, H02S 20/30

(54) **REFLECTOR AND SOLAR POWER GENERATION SYSTEM**

(30) Priority: 27.04.2022 CN 202221007473 U
(71) Applicant: Shenzhen Hello Tech Energy Co., Ltd., Shenzhen City, Guangdong 518000 (CN)
(72) Inventor: ZHU, Yanjun, Shenzhen, 518000 (CN); LUO, Xiangwen, Shenzhen, 518000 (CN); SUN, Zhongwei, Shenzhen, 518000 (CN)
(74) Representative: HGF

(57) **Abstract**

Provided are a reflector and a solar power generation system. The reflector is configured to reflect sunlight onto the double-sided power generation cell (100) and mainly includes the reflector (200). The reflector (200) is provided with a plurality of reflection regions. Each of the plurality of reflection regions is provided with a reflection protrusion having a different inclination angle. The double-sided power generation cell (100) is obliquely disposed between two adjacent ones of the plurality of reflection regions. The reflection regions are capable of reflecting the sunlight onto a light-receiving side and a rear side of the double-sided power generation cell (100).

## Description

### TECHNICAL FIELD

The present disclosure relates to the photovoltaic field and, in particular, a reflector and a solar power generation system.

### BACKGROUND

At present, a crystalline silicon solar cell is mainly divided into a single-sided power generation cell and a double-sided power generation cell. Since the double-sided power generation cell has the effect of generating power on both sides, the power generation efficiency of the solar cell is drastically improved. Therefore, the double-sided power generation cell is gradually favored by the market.

In the related art, the power generation amount (the sum of the front-side power generation amount and the rear-side power generation amount) of the double-sided power generation cell is typically improved by increasing the power generation amount of the rear side of the double-sided power generation cell. In general, people lay grids or reflection films on the ground, or paint the white paint on the ground, in the ground mounting regions of the double-sided power generation cell, or add a reflector having a concave mirror, so as to increase the reflection of sunlight. However, the preceding methods not only are higher in costs, unfavorable for carrying and storage, and have larger device volume, but also can only increase power generation amount of the rear side of the double-sided cell.

Therefore, it is urgent to design a reflector and a solar power generation system to solve the technical problems in the related art.

### SUMMARY

The object of the present disclosure provides a reflector that is simple in structure, easy to store and carry, and can improve power generation amount of both the light-receiving side and the rear side of the double-sided power generation cell and save costs.

To achieve this object, the present disclosure adopts the solutions below.

The present disclosure provides a reflector configured to reflect sunlight onto a double-sided power generation cell.

The reflector is provided with a plurality of reflection regions. Each of the plurality of reflection regions is provided with a reflection protrusion having a different inclination angle.

In an optional solution of the reflector, the reflection region includes a first reflection region, a second reflection region, a third reflection region, and a fourth reflection region that are arranged in a line. The third reflection region and the fourth reflection region are located between the first reflection region and the second reflection region.

In an optional solution of the reflector, the first reflection region is provided with a first reflection protrusion having a section of a right triangle. The hypotenuse of the right triangle is at an angle of 0° to 20° with respect to a plane where the first reflection region is located.

In an optional solution of the reflector, the second reflection region is provided with a second reflection protrusion having a section of a right triangle. The hypotenuse of the right triangle is at an angle of 45° to 75° with respect to a plane where the second reflection region is located.

In an optional solution of the reflector, the third reflection region is provided with a third reflection protrusion having a section of a right triangle. The hypotenuse of the right triangle is at an angle of 20° to 45° with respect to a plane where the third reflection region is located.

In an optional solution of the reflector, the fourth reflection region is provided with a fourth reflection protrusion having a section of a right triangle. The hypotenuse of the right triangle is at an angle of 20° to 45° with respect to a plane where the fourth reflection region is located. The inclination angle of the fourth reflection protrusion is opposite to the inclination angle of the third reflection protrusion.

In an optional solution of the reflector, the length of the first reflection region does not exceed the width of the double-sided power generation cell.

In an optional solution of the reflector, the sum of the length of the second reflection region, the length of the third reflection region, and the length of the fourth reflection region does not exceed two times the width of the double-sided power generation cell.

In an optional solution of the reflector, the reflector is coated with a waterproof layer.

The present disclosure also provides a solar power generation system including a reflector and a double-sided power generation cell. The reflector is provided with a plurality of reflection regions. Each of the plurality of reflection regions is provided with a reflection protrusion having a different inclination angle. The double-sided power generation cell is inclinedly disposed between two adjacent ones of the plurality of reflection regions. The plurality of reflection regions are capable of reflecting sunlight onto a light-receiving side and a rear side of the double-sided power generation cell. The reflector is the preceding reflector.

The present disclosure has the beneficial effects below.

Compared with the related art, the reflector provided in the present disclosure is simple in structure and easy to store and carry. The reflector is provided with a plurality of reflection regions. The plurality of reflection regions are provided with the reflection protrusions having different inclination angles. In this manner, sunlight indirectly hitting the light-receiving side can be reflected onto the light-receiving side and the rear side of the double-sided power generation cell through the reflection regions, thereby increasing the power generation amount of the double-sided power generation cell and saving costs.

The present disclosure also provides a solar power generation system that is simple in structure and can increase the power generation amount of the double-sided power generation cell, thereby saving costs.

### BRIEF DESCRIPTION OF DRAWINGS

To illustrate the solutions in embodiments of the present disclosure more clearly, the drawings used in description of the embodiments will be briefly described below. Apparently, the drawings described below illustrate part of the embodiments of the present disclosure, and those of ordinary skill in the art may obtain other drawings based on the drawings described below on the premise that no creative work is done.
FIG. 1 is a structure view of a reflector according to an embodiment of the present disclosure.
FIG. 2 is a front view of a reflector according to an embodiment of the present disclosure.
FIG. 3 is a view one illustrating the operation principle of a reflector according to an embodiment of the present disclosure.
FIG. 4 is a view two illustrating the operation principle of a reflector according to an embodiment of the present disclosure.
FIG. 5 is a view three illustrating the operation principle of a reflector according to an embodiment of the present disclosure.
FIG. 6 is a view four illustrating the operation principle of a reflector according to an embodiment of the present disclosure.
FIG. 7 is a view five illustrating the operation principle of a reflector according to an embodiment of the present disclosure.

### Reference list

- 100: double-sided power generation cell
- 200: reflector
- 210: first reflection region
- 2101: first reflection protrusion
- 220: second reflection region
- 2201: second reflection protrusion
- 230: third reflection region
- 2301: third reflection protrusion
- 240: fourth reflection region
- 2401: fourth reflection protrusion

### DETAILED DESCRIPTION

To better illustrate the solved problem, adopted solutions and achieved effects of the present disclosure, the present disclosure is further described in conjunction with drawings and embodiments.

In the description of the present disclosure, terms "jointed", "connected", or "fixed" are to be construed in a broad sense unless otherwise expressly specified and limited. For example, the term "connected" may refer to "securely connected", "detachably connected" or "integrally connected", may refer to "mechanically connected" or "electrically connected", or may refer to "connected directly", "connected indirectly through an intermediary" or "intraconnected between two components or interactional between two components". For those of ordinary skill in the art, specific meanings of the preceding terms in the present disclosure may be understood based on specific situations.

In the present disclosure, unless otherwise expressly specified and limited, when a first feature is described as "on" or "below" a second feature, the first feature and the second feature may be in direct contact or may be in contact via another feature between the two features instead of being in direct contact. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below" or "underneath" the second feature, the first feature is right under, below, or underneath the second feature or the first feature is obliquely under, below, or underneath the second feature, or the first feature is simply at a lower level than the second feature.

In the description of the embodiments, it is to be noted that orientations or position relations indicated by terms such as "above", "below", "left", and "right" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present disclosure. In addition, the terms "first" and "second" are used only to distinguish between descriptions and have no special meaning.

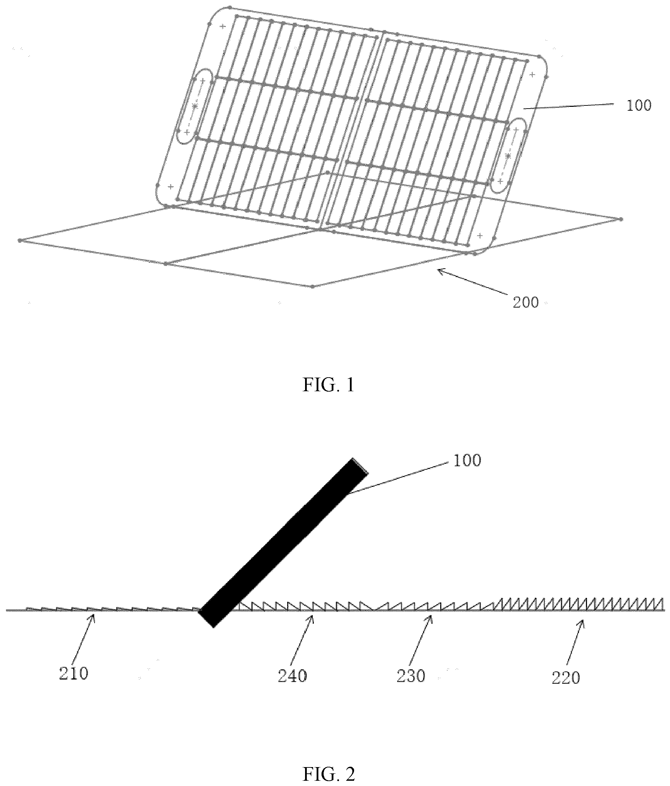

As shown in FIGS. 1 to 2, the present embodiment provides a reflector 200 configured to reflect sunlight onto a double-sided power generation cell 100. The reflector 200 in the present embodiment is provided with a plurality of reflection regions. Each of the reflection regions is provided with a reflection protrusion having a different inclination angle. The double-sided power generation cell 100 is obliquely provided between two adjacent reflection regions. The reflection regions are capable of reflecting the sunlight onto a light-receiving side and a rear side of the double-sided power generation cell 100.

Compared with the related art, the reflector 200 provided in the present embodiment is simple in structure and easy to store and carry. The reflector 200 is set to be a plurality of reflection regions. The plurality of reflection regions are provided with the reflection protrusions having different inclination angles. In this manner, sunlight not directly hitting the light-receiving side can be reflected onto the light-receiving side and the rear side of the double-sided power generation cell 100 through the reflection regions, thereby increasing the power generation amount of the double-sided power generation cell 100 and saving costs. It has been verified by a number of experiments that the power generation capacity of the light-receiving side of the double-sided power generation cell 100 can be increased by 7% or more, and the power generation capacity of the rear side can be increased by 13% or more by using the reflector 200.

Specifically, as shown in FIG. 2, in the present embodiment, the reflection regions include a first reflection region 210, a second reflection region 220, a third reflection region 230, and a fourth reflection region 240 that are arranged in a line. The double-sided power generation cell 100 is disposed between the first reflection region 210 and the second reflection region 220. The first reflection region 210 can reflect the sunlight onto the light-receiving side of the double-sided power generation cell 100. The second reflection region 220, the third reflection region 230, and the fourth reflection region 240 can reflect the sunlight onto the rear side of the double-sided power generation cell 100. Apparently, an operator can set the double-sided power generation cell 100 between the other two adjacent reflection regions, such as between the second reflection region 220 and the third reflection region 230, or between the third reflection region 230 and the fourth reflection region 240 according to actual situations. The position of the double-sided power generation cell 100 is not limited in the present embodiment. In addition, the operator may specifically set the reflection regions to a plurality of parts such as two reflection regions, three reflection regions, or five reflection regions according to the local altitude and latitude and the angle of light. The present embodiment only takes four reflection regions as an example for description.

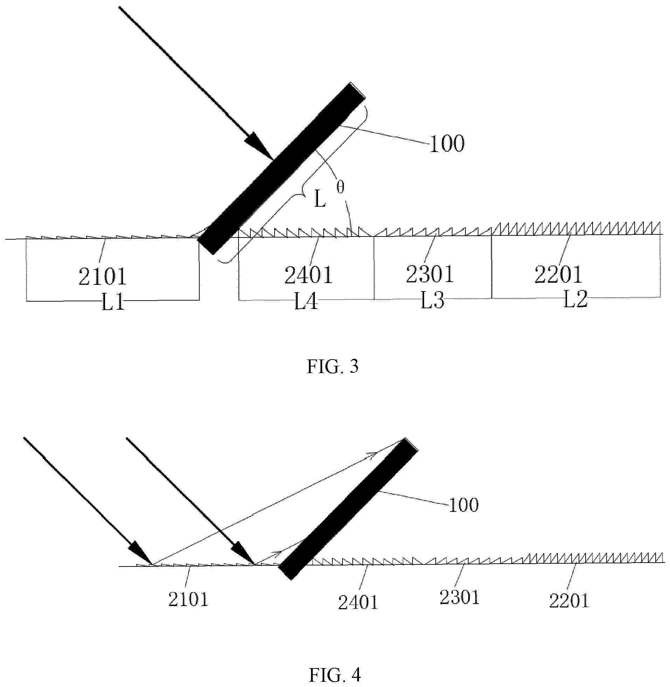

As shown in FIGS. 3 to 7, when the sunlight hits the double-sided power generation cell 100, the light-receiving side mainly receives the direct sunlight, while sunlight at another angle is reflected and scattered by the first reflection region 210, the second reflection region 220, the third reflection region 230, and the fourth reflection region 240 in the light-receiving side and the rear side of the double-sided power generation cell 100.

Exemplarily, as shown in FIGS. 3 and 4, the length of the double-sided power generation cell 100 is set to L. The inclination angle between the double-sided power generation cell 100 and the reflector 200 is θ. In the present embodiment, the first reflection region 210 is provided with first reflection protrusions 2101. Each of the first reflection protrusions 2101 has a section of a right triangle. The hypotenuse of the right triangle is at an angle of 0° to 20° with respect to a plane where the first reflection region 210 is located. That is, the first reflection protrusions 2101 are configured to be a plurality of low-angle (not more than 20°) right triangles. Each right triangle has a width of 3mm to 10mm. The plurality of right triangles are consecutively arranged. Preferably, the length L1 of the first reflection region 210 is L/2/cosθ.

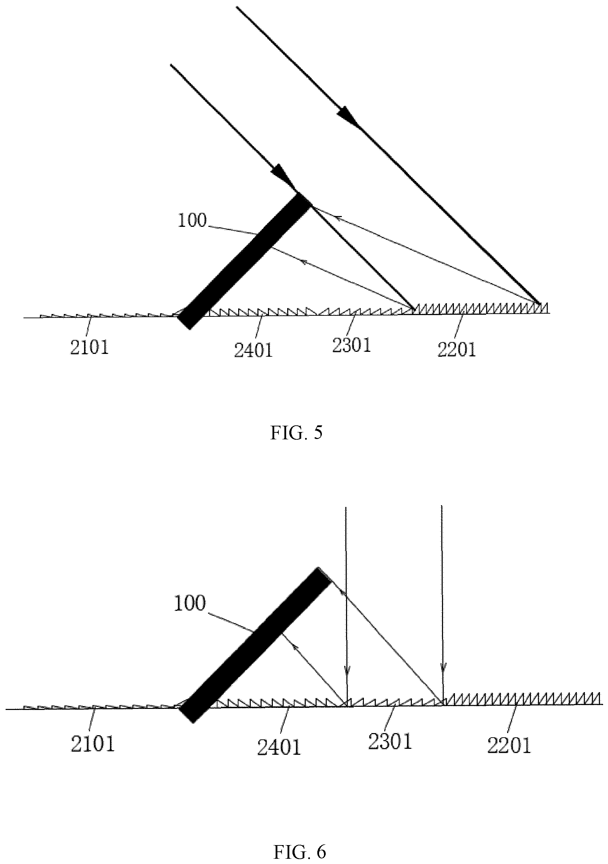

As shown in FIGS. 3 and 5, the second reflection region 220 is provided with second reflection protrusions 2201. Each of the second reflection protrusions 2201 has a section of a right triangle. The hypotenuse of the right triangle is at an angle of 45° to 75° with respect to a plane where the second reflection region 220 is located. The angle is greater than θ. That is, the second reflection protrusions 2201 are configured to be a plurality of high-angle (greater than or equal to 45°) right triangles. Each right triangle has a width of 3mm to 10mm. The plurality of right triangles are consecutively arranged. Preferably, the length L2 of the second reflection region 210 is L/2/cosθ.

As shown in FIGS. 3 and 6, the third reflection region 230 is provided with third reflection protrusions 2301. Each of the third reflection protrusions 2301 has a section of a right triangle. The hypotenuse of the right triangle is at an angle of 20° to 45° with respect to a plane where the third reflection region 230 is located. The angle is less than θ. That is, the third reflection protrusions 2301 are configured to be a plurality of middle-angle (between 20° and 45°) right triangles. Each right triangle has a width of 3mm to 10mm. The plurality of right triangles are consecutively arranged. Preferably, the length L3 of the third reflection region 230 is L/cosθ - L^{∗}cosθ.

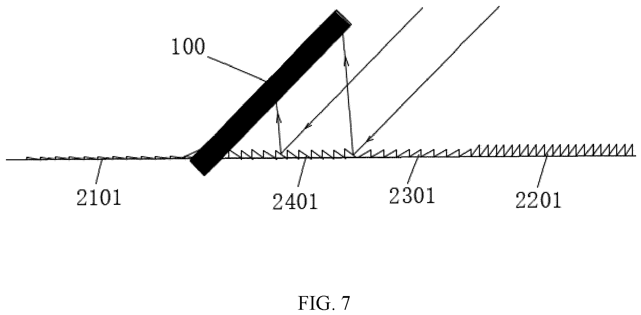

As shown in FIGS. 3 and 7, the fourth reflection region 240 is provided with fourth reflection protrusions 2401. Each of the fourth reflection protrusions 2401 has a section of a right triangle. The hypotenuse of the right triangle is at an angle of 20° to 45° with respect to a plane where the fourth reflection region 240 is located. The angle is less than θ. It is to be emphasized that the inclination angle of the fourth reflection protrusion 2401 is opposite to the inclination angle of the third reflection protrusion 2301. That is, the fourth reflection protrusions 2401 are configured to be a plurality of middle-angle (between 20° and 45°) right triangles. Each right triangle has a width of 3mm to 10mm. The plurality of right triangles are consecutively arranged. Preferably, the length L4 of the fourth reflection region 240 is L^{∗}cosθ.

Optionally, in the present embodiment, the length of the first reflection region 210 does not exceed the width of the double-sided power generation cell 100. The sum of the length of the second reflection region 220, the length of the third reflection region 230, and the length of the fourth reflection region 240 does not exceed two times the width of the double-sided power generation cell 100. In this manner, it is ensured to reduce the weight and the manufacturing cost of the reflector 200 while increasing the power generation capacity of the double-sided power generation cell 100, facilitating carrying and storage.

Optionally, in the present embodiment, the reflector 200 is coated with the waterproof layer that is beneficial for the reflector 200 to generate electricity on rainy days and improving the flexibility and applicability of the reflector 200.

Optionally, in the present embodiment, the reflector 200 is made of a soft aluminized reflection mylar or a high-reflection material containing a high-molecular polymer having a reflectivity greater than 90%. Apparently, the operator may also use another reflection material to manufacture the reflector 200. The material is not limited in the present embodiment.

Optionally, in the present embodiment, the reflector 200 may be formed with a plurality of folds and finally folded into one, two, or more pieces. The reflector 200 may be mounted at the edge of the double-sided power generation cell 100 by screwing or sewing, and folded and stored together with the double-sided power generation cell 100 in the middle or the outer layer of the double-sided power generation cell 100 so that the reflector 200 may play a certain shock-absorbing role when the double-sided power generation cell 100 is transported.

Optionally, in the present embodiment, the reflector 200 includes a bracket (not shown in the figure) provided on the rear side. The bracket can play a certain supporting role for the double-sided power generation cell 100 and make the double-sided power generation cell 100 and the reflector 200 have an inclination angle of θ, improving the stability and the reliability of the double-sided power generation cell 100.

The present disclosure also provides a solar power generation system mainly including a reflector 200 and a double-sided power generation cell 100. The reflector 200 is provided with a plurality of reflection regions. Each of the plurality of reflection regions is provided with a reflection protrusion having a different inclination angle. The double-sided power generation cell 100 is inclinedly disposed between two adjacent ones of the plurality of reflection regions. The plurality of reflection regions are capable of reflecting sunlight onto a light-receiving side and a rear side of the double-sided power generation cell 100. The reflector 200 is the preceding reflector 200. The solar power generation system is simple in structure and can increase the power generation amount of the double-sided power generation cell 100, thereby saving costs.

It is to be noted that the description of the specification, the description of reference terms such as "some embodiments" and "other embodiments" is intended to mean that specific features, structures, materials, or characteristics described in conjunction with such embodiments or examples are included in at least one embodiment or example of the present disclosure. In the specification, the illustrative description of the preceding terms does not necessarily refer to the same embodiment or example. Moreover, the described specific features, structures, materials, or characteristics may be combined in an appropriate manner in any one or more embodiments or examples.

## Claims

1. A reflector (200), configured to reflect sunlight onto a double-sided power generation cell (100), wherein the reflector (200) is provided with a plurality of reflection regions, and each of the plurality of reflection regions is provided with a reflection protrusion having a different inclination angle.

2. The reflector (200) according to claim 1, wherein the plurality of reflection regions comprise a first reflection region (210), a second reflection region (220), a third reflection region (230), and a fourth reflection region (240) that are arranged in a line, and the third reflection region (230) and the fourth reflection region (240) are located between the first reflection region (210) and the second reflection region (220).

3. The reflector (200) according to claim 2, wherein the first reflection region (210) is provided with a first reflection protrusion (2101) having a section of a right triangle of which a hypotenuse is at an angle of 0° to 20° with respect to a plane where the first reflection region (210) is located.

4. The reflector (200) according to claim 2, wherein the second reflection region (220) is provided with a second reflection protrusion (2201) having a section of a right triangle of which a hypotenuse is at an angle of 45° to 75° with respect to a plane where the second reflection region (220) is located.

5. The reflector (200) according to claim 2, wherein the third reflection region (230) is provided with a third reflection protrusion (2301) having a section of a right triangle of which a hypotenuse is at an angle of 20° to 45° with respect to a plane where the third reflection region (230) is located.

6. The reflector (200) according to claim 5, wherein the fourth reflection region (240) is provided with a fourth reflection protrusion (2401) having a section of a right triangle of which a hypotenuse is at an angle of 20° to 45° with respect to a plane where the fourth reflection region (240) is located, and an inclination angle of the fourth reflection protrusion (2401) is opposite to an inclination angle of the third reflection protrusion (2301).

7. The reflector (200) according to claim 2, wherein a length of the first reflection region (210) does not exceed a width of the double-sided power generation cell (100).

8. The reflector (200) according to claim 2, wherein a sum of a length of the second reflection region (220), a length of the third reflection region (230) and a length of the fourth reflection region (240) does not exceed two times a width of the double-sided power generation cell (100).

9. The reflector (200) according to any one of claims 1 to 8, wherein the reflector (200) is coated with a waterproof layer.

10. A solar power generation system, comprising: a reflector (200) and a double-sided power generation cell (100), wherein the reflector (200) is provided with a plurality of reflection regions, each of the plurality of reflection regions is provided with a reflection protrusion having a different inclination angle, the double-sided power generation cell (100) is inclinedly disposed between two adjacent ones of the plurality of reflection regions, the plurality of reflection regions are capable of reflecting sunlight onto a light-receiving side and a rear side of the double-sided power generation cell (100), and the reflector (200) is the reflector (200) according to any one of claims 1 to 9.
